# EUROPÄISCHE PATENTSCHRIFT

(11) **EP 2 228 576 B1**
(45) Veröffentlichungstag und Bekanntmachung des Hinweises auf die Patenterteilung: **08.12.2010**
(21) Anmeldenummer: 09003421.6
(22) Anmeldetag: 10.03.2009
(51) Int. Cl.: F16K 31/08, F16K 31/42, F16K 11/07

(54) **Ventileinrichtung**
Valve device
Dispositif de soupape

(43) Veröffentlichungstag der Anmeldung: 15.09.2010
(73) Patentinhaber: FESTO AG & Co. KG, 73734 Esslingen (DE)
(72) Erfinder: Kiefer, Thomas, 70806 Kornwestheim (DE); Ghimpu-Mundinger, Radu, 71229 Leonberg (DE)
(74) Vertreter: Abel, Martin

(56) Entgegenhaltungen:
- EP-A- 1 069 318
- EP-A- 2 080 942
- DE-A1- 2 729 482
- DE-B1- 1 475 930

## Beschreibung

Die Erfindung betrifft eine Ventileinrichtung, mit einem in einer Aufnahmekammer eines Ventilgehäuses zum Ändern seiner Schaltstellung axial bewegbar angeordneten Ventilschieber, der zwischen einer durch Anschlagmittel vorgegebenen ersten Endstellung und einer zweiten Endstellung umschaltbar ist, und der in der ersten Endstellung durch in Richtung der ersten Endstellung wirkende und ihn gegen die Anschlagmittel drückende axiale Magnetkräfte lösbar festgehalten wird, die von einer mindestens einen Permanentmagnet enthaltenden permanentmagnetischen Halteeinrichtung erzeugt werden, die einen am Ventilschieber angeordneten und dessen Umschaltbewegung mitmachenden beweglichen Halteabschnitt und einen mit diesem beweglichen Halteabschnitt magnetisch zusammenwirkenden, ortsfest am Ventilgehäuse angeordneten ortsfesten Halteabschnitt aufweist, wobei der bewegliche und der ortsfeste Halteabschnitt der permanentmagnetischen Halteeinrichtung in einer bezüglich der Längsachse des Ventilschiebers radialen Richtung versetzt zueinander angeordnet sind und außerdem so angeordnet sind, dass der bewegliche Halteabschnitt in der ersten Endstellung dem ortsfesten Halteabschnitt mit zumindest einem Teil seiner Länge in Richtung der zweiten Endstellung axial vorgelagert ist und die axialen Magnetkräfte somit aus der axialen Magnetfeldkomponente des sich zwischen den beiden axial versetzten Halteabschnitten ausbildenden Magnetfeldes resultieren, wobei der Ventilschieber zwei einander entgegengesetzt orientierte, erste und zweite Endabschnitte aufweist und beim Umschalten in die erste Endstellung mit vorauseilendem erstem Endabschnitt in einer ersten Umschaltrichtung und beim Umschalten in die zweite Endstellung mit vorauseilendem zweitem Endabschnitt in einer zweiten Umschaltrichtung verschoben wird

Aus der EP 1 760 376 A1 ist eine als vorgesteuertes Impulsventil ausgebildete Ventileinrichtung bekannt. Ein Impulsventil ist ein Mehrwegeventil, dessen Ventilschieber zum Umschalten zwischen zwei Endstellungen impulsartig mittels eines fluidischen Steuerdruckes beaufschlagt wird, wobei der Ventilschieber die Endstellung auch nach der Wegnahme des Steuerdruckes beibehält. Damit der Ventilschieber auch bei Erschütterungen oder Veränderungen in der Orientierung der Ventileinrichtung in der Endstellung verharrt, ist den beiden Endabschnitten des Ventilschiebers jeweils eine permanentmagnetische Halteeinrichtung zugeordnet. Die Halteeinrichtung enthält mindestens einen Permanentmagnet und bewirkt ein lösbares Festhalten des Ventilschiebers mit Bezug zum Ventilgehäuse mittels axialen Magnetkräften. Die axialen Magnetkräfte bilden sich bei der EP 1 760 376 A1 zwischen sich axial gegenüberliegenden Halteabschnitten aus, von denen ein ortsfester Halteabschnitt im stirnseitigen Bereich der Aufnahmekammer des Ventilgehäuses platziert ist und ein die Bewegung des Ventilschiebers mitmachender beweglicher Halteabschnitt an der zugewandten Stirnseite des Ventilschiebers angeordnet oder ausgebildet ist. Mechanische Anschlagmittel bewirken eine exakte Vorgabe der jeweiligen Endstellung, indem der Ventilschieber daran durch die sich ausbildenden axialen Magnetkräfte angedrückt wird. Die für das Festhalten in einer Endstellung zuständige Halteeinrichtung ist demjenigen Endabschnitt des Ventilschiebers zugeordnet, der beim Umschalten in die zu fixierende Endstellung vorauseilt.

Bei der bekannten Ventileinrichtung ist die magnetische Haltefunktion sehr stark von den auftretenden Fertigungstoleranzen abhängig. Schon geringfügige Abweichungen einer durch die Anschlagmittel vorgegebenen Endstellung von der rechnerisch optimalen Sollposition wirken sich nennenswert auf die axialen Magnetkräfte aus und können ein entweder zu starkes oder zu schwaches Festhalten bewirken.

Die DE 27 29 482 offenbart eine Ventileinrichtung der eingangs genannten Art, deren grundsätzliche Funktionsweise derjenigen des aus der oben genannten EP 1 760 376 A1 bekannten Impulsventils entspricht, wobei allerdings der bewegliche und der ortsfeste Halteabschnitt der permanentmagnetischen Halteeinrichtung radial versetzt zueinander angeordnet sind. Wie in der EP 1 760 376 A1 ist die für das Festhalten des Ventilschiebers in einer Endstellung zuständige Halteeinrichtung demjenigen Endabschnitt des Ventilschiebers zugeordnet, der beim Umschalten in die zu fixierende Endstellung vorauseilt. Entsprechendes gilt für die aus der EP 2 080 942 und aus der DE 1 475 930 bekannten Ventileinrichtungen.

Es ist die Aufgabe der vorliegenden Erfindung, Maßnahmen vorzuschlagen, deren mindestens eine permanentmagnetische Halteeinrichtung wenig empfindlich auf Fertigungstoleranzen reagiert.

Zur Lösung dieser Aufgabe ist vorgesehen, dass die zum lösbaren magnetischen Festhalten der ersten Endstellung dienende permanentmagnetische Halteeinrichtung dem zweiten Endabschnitt des Ventilschiebers zugeordnet ist und die von dieser permanentmagnetischen Halteeinrichtung erzeugten axialen Magnetkräfte in der ersten Umschaltrichtung orientiert sind.

Eine vergleichbare magnetische Haltefunktion ist bei Bedarf auch hinsichtlich der zweiten Endstellung realisierbar. Hierzu würde man dann die Ventileinrichtung mit einer mit umgekehrten Vorzeichen arbeitenden weiteren, zweiten permanentmagnetischen Halteeinrichtung ausstatten.

Obgleich das magnetische Festhalteprinzip für viele Arten von Ventileinrichtungen geeignet ist, empfiehlt sich seine Realisierung vor allem bei den eingangs schon erläuterten sogenannten Impulsventilen. Der Ventilschieber lässt sich auch dann zuverlässig festhalten, wenn er ohne Elastomerdichtungen mit dem Ventilgehäuse kooperiert und die Dichtflächen aus einem harten, insbesondere einem metallischen Material bestehen. Die Erfindung lässt sich in vorteilhafter Weise bei Ventileinrichtungen mit Metall-Ventilschiebern verwirklichen.

Bei dem spezifischen Magnetprinzip der Erfindung werden die das Festhalten in der betreffenden Endstellung bewirkenden axialen Magnetkräfte nicht von sich axial, in der Längsrichtung des Ventilschiebers gegenüberliegenden Magnetflächen bestimmt, sondern vorwiegend durch die axiale Magnetfeldkomponente des sich radial zwischen den beiden Halteabschnitten ausbildenden Anteils des Magnetfeldes. Die Halteabschnitte sind so platziert, dass sich bei Einnahme der festzuhaltenden Endstellung ein axialer Versatz einstellt, bedingt durch den der bewegliche Halteabschnitt dem zugeordneten ortsfesten Halteabschnitt zumindest ein Stückweit in Richtung der momentan nicht festzuhaltenden Endstellung vorgelagert ist, so dass die sich ergebende axiale Magnetfeldkomponente den Ventilschieber aktiv in Richtung der festzuhaltenden Endstellung zieht. Die besondere Unempfindlichkeit gegen Fertigungs- und Montagetoleranzen resultiert insbesondere daraus, dass sich geringfügige Variationen in der axialen Relativlage zwischen den radial versetzt zueinander angeordneten Halteabschnitten nicht relevant auf die erzielbaren magnetischen Haltekräfte auswirken.

Besonders vorteilhaft ist, dass sich die zur Fixierung einer Endstellung dienende permanentmagnetische Halteeinrichtung im Bereich desjenigen Endabschnittes des Ventilschiebers befindet, der beim Umschalten in die zu fixierende Endstellung nacheilt beziehungsweise an der Rückseite des Ventilschiebers angeordnet ist. Die zur Fixierung dienenden axialen Magnetkräfte werden also quasi jeweils von der Rückseite her in den Ventilschieber eingeleitet. Mit dieser Maßnahme lässt sich das erfindungsgemäße magnetische Haltekonzept besonders einfach verwirklichen.

Vorteilhafte Weiterbildungen der Erfindung gehen aus den Unteransprüchen hervor.

Vorzugsweise ist die mindestens eine permanentmagnetische Halteeinrichtung so ausgelegt, dass sich ihr beweglicher und ihr ortsfester Halteabschnitt bei Einnahme der festzuhaltenden Endstellung in axialer Richtung, also in Achsrichtung der Längsachse des Ventilschiebers, überlappen. Ein Teil der axialen Länge des beweglichen Halteabschnittes nimmt somit eine sich mit dem ortsfesten Halteabschnitt überlappende Position ein, während der andere Längenabschnitt in axialer Richtung bezüglich des ortsfesten Halteabschnitts vorsteht.

Besonders vorteilhaft ist eine Anordnung, bei der der ortsfeste Halteabschnitt ringförmig ausgebildet ist und koaxial zum Ventilschieber angeordnet ist. Er kann insbesondere eine den Ventilschieber koaxial umschließende Position einnehmen. Der für die Ausbildung der axialen Magnetkräfte verantwortliche Längenabschnitt des beweglichen Halteabschnittes liegt hierbei axial außerhalb des ringförmigen ortsfesten Halteabschnittes.

In vielen Fällen ist es vorteilhaft, in das Ventilgehäuse eine zur Verschiebeführung des Ventilschiebers dienende Führungshülse einzusetzen. Diese vereinfacht die Herstellung einer präzisen Lauffläche für den beispielsweise aus Metall bestehenden Ventilschieber. In vorteilhafter Weise kann mindestens ein Endabschnitt einer solchen Führungsschiene den ortsfesten Halteabschnitt einer permanentmagnetischen Halteeinrichtung bilden. Besonders zweckmäßig ist in diesem Fall die Verwendung einer durchgängig aus einem ferromagnetischen Material bestehenden Führungshülse, deren mindestens einer Endabschnitt dann einen ortsfesten Halteabschnitt in Gestalt eines aus ferromagnetischem Material bestehenden Flussleitkörpers repräsentiert. Eine durchgängig ferromagnetische Führungshülse kann bei Bedarf mit ihren einander entgegengesetzten Endabschnitten die ortsfesten Halteabschnitte zweier für die Fixierung unterschiedlicher Endstellungen zuständiger Halteeinrichtungen bilden.

In Verbindung mit der Verwendung einer Führungshülse wäre es aber auch möglich, auf eine nicht ferromagnetische Führungshülse zurückzugreifen und mindestens ein separates Element an der Führungshülse zu fixieren, beispielsweise ein ferromagnetisches Element oder ein permanentmagnetisches Element, das dann einen ortsfesten Halteabschnitt bildet.

Wenn die Funktionalität des ortsfesten Halteabschnittes in eine Führungshülse für den Ventilschieber integriert ist, besteht das umgebende Ventilgehäuse zweckmäßigerweise aus einem magnetisch nicht leitenden Material, insbesondere Aluminiummaterial oder Kunststoffmaterial.

Ob mit oder ohne Führungshülse, kann der ortsfeste Halteabschnitt auch direkt durch das Ventilgehäuse realisiert werden. Es genügt dann die Verwendung eines Ventilgehäuses, das im entsprechenden Bereich oder zur Gänze aus einem ferromagnetischen Material besteht, insbesondere aus Stahl.

Der bewegliche Halteabschnitt der Halteeinrichtung befindet sich zweckmäßigerweise an einem Endabschnitt des Ventilschiebers, wobei er bezüglich der axialen Stirnfläche des Ventilschiebers durchaus axial beabstandet sein kann. Besonders zweckmäßig ist es, als am Ventilschieber angeordneten beweglichen Halteabschnitt mindestens einen Permanentmagnet vorzusehen, zweckmäßigerweise kombiniert mit mindestens einem axial benachbarten ferromagnetischen Polstück. Das Polstück ist insbesondere in Verbindung mit einem axial magnetisierten Permanentmagnet vorteilhaft, weil es, insbesondere bei entsprechend dünner Ausgestaltung, das sich ausbildende Magnetfeld konzentriert nach radial außen zu dem axial zurückversetzten ortsfesten Halteabschnitt leiten kann.

Der mindestens eine Permanentmagnet und das gegebenenfalls auch vorhandene mindestens eine Polstück sind zweckmäßigerweise als Ringkörper ausgebildet, was ihre Befestigung am Ventilschieber vereinfacht. Der Ventilschieber kann einen zur Steuerung von Fluidströmen mit Steuerkanten kooperierenden länglichen Steuerkörper aufweisen, an den an mindestens einer Stirnseite ein beweglicher Halteabschnitt einer permanentmagnetischen Halteeinrichtung angesetzt ist. Zur Fixierung kann hierbei auf einen vorzugsweise aus einem magnetisch nicht leitenden Material bestehenden Befestigungsbolzen zurückgegriffen werden, der den oder die Ringkörper mit einem Befestigungsschaft durchsetzt, sodass der bewegliche Halteabschnitt axial zwischen dem Befestigungskopf und der Stirnfläche des Steuerkörpers gehalten ist.

Zweckmäßigerweise liegt zwischen dem Befestigungsschaft und dem Steuerkörper eine dahingehende Befestigung vor, dass axiale Relativbewegungen ausgeschlossen sind. Dies kann beispielsweise durch Einpressen und/oder Einkleben und/oder Einschrauben des Befestigungsschaftes in den Steuerkörper verwirklicht werden. Wenn bei Erreichen einer Endstellung axiale Aufprallkräfte in den Ventilschieber eingeleitet werden, können diese somit vom Befestigungskopf aufgefangen und unter Umgehung des beweglichen Halteabschnittes über den Befestigungsschaft in den Steuerkörper eingeleitet werden.

Die Ventileinrichtung ist vorzugsweise für durch Fluidkraft hervorzurufendes Umschalten des Ventilschiebers ausgelegt. In diesem Zusammenhang verfügt der Ventilschieber an einer oder an beiden Stirnseiten zweckmäßigerweise über einen Antriebskolben, der mit dem die Umschaltkraft liefernden Steuerfluid beaufschlagbar ist. Es ist möglich, den Antriebskolben als bezüglich des Steuerkörpers und der daran fixierten Halteeinrichtung separates Bauteil auszubilden, das nur lose an den vorgenannten Komponenten anliegt. Alternativ hierzu ließe sich diese Anordnung aber auch als fest zusammenhängende Baueinheit realisieren.

Bei Bedarf kann in vorteilhafter Weise mindestens ein zu einem beweglichen Halteabschnitt gehörender Permanentmagnet genutzt werden, um durch Zusammenwirken mit im oder am Ventilgehäuse angeordneten Positionserfassungsmitteln eine Schaltstellungsabfrage des Ventilschiebers zu ermöglichen.

Die Erfindung und ihre vorteilhaften Ausgestaltungen ermöglichen ein allein auf Magnetkraft basierendes verschleißfreies Fixieren der Endstellungen. Durch den in der zu fixierenden Endstellung vorhandenen axialen Versatz der Halteabschnitte ergibt sich außerdem ständig eine den Ventilschieber in Richtung der zu fixierenden Endstellung beaufschlagende Magnetkraft, so dass ein zuverlässiges Festhalten gewährleistet ist. Lage-, Längen- und Hubtoleranzen lassen sich sehr gut abfangen. Da zwischen den miteinander kooperierenden Halteabschnitten der permanentmagnetischen Halteeinrichtung auch in der zu fixierenden Endstellung kein Flächenkontakt auftritt, wird das Entstehen übermäßiger Haltekräfte vermieden, und es ist mit durchschnittlichem Kraftaufwand ein zuverlässiges Umschalten in die jeweils andere Schaltstellung möglich. Die notwendige Magnetkraft lässt sich durch entsprechende Ausbildung des Radialabstandes zwischen den miteinander kooperierenden Halteabschnitten sehr gut kontrollieren. Darüber hinaus erübrigen sich komplexe, nur unter erhöhtem Aufwand herstellbare Geometrien, um das Magnetfeld zur Ausbildung der axialen Magnetkräfte zu schließen.

Vorzugsweise ist die mindestens eine Halteeinrichtung so ausgebildet, dass bei Einnahme einer Endstellung des Ventilschiebers die Halteabschnitte derjenigen Halteeinrichtung, die für die Aufrechterhaltung der momentanen Endstellung nicht verantwortlich ist, so weit axial zueinander beabstandet sind, dass sich dazwischen keine axialen Magnetanziehungskräfte ausbilden, die betreffende Halteeinrichtung also inaktiv ist. Dadurch wird vermieden, dass die Haltefunktion der momentan aktiven anderen Halteeinrichtung geschwächt wird.

Nachfolgend wird die Erfindung anhand der beiliegenden Zeichnung näher erläutert. In dieser zeigen:
- Figur 1: einen Längsschnitt durch eine bevorzugte Ausfüh- rungsform der erfindungsgemäßen Ventileinrichtung, die mit zwei Halteeinrichtungen zur magnetischen Fixierung je einer der beiden möglichen Endstellun- gen des Ventilschiebers zuständig sind, wobei die Zeichnung den Ventilschieber bei Einnahme einer nach links bewegten ersten Endstellung zeigt,
- Figur 2: den in Figur 1 strichpunktiert umrahmten Ausschnitt II im Bereich des ersten Endabschnittes des Ventil- schiebers in einer vergrößerten Darstellung und
- Figur 3: den in Figur 1 strichpunktiert umrahmten Ausschnitt III im Bereich des zweiten Endabschnittes des Ven- tilschiebers in einer ebenfalls vergrößerten Dar- stellung.

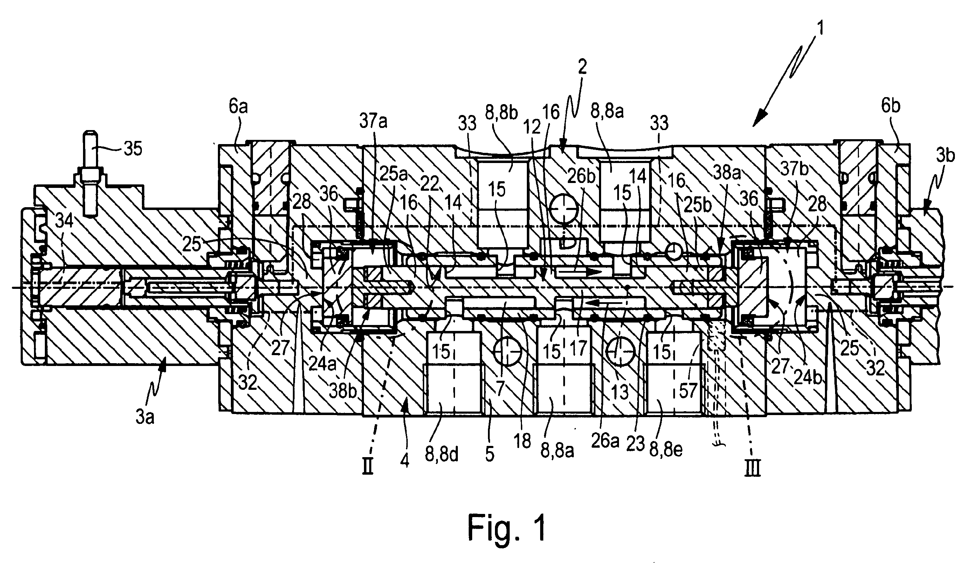

Aus Figur 1 ist in einem Längsschnitt die Gesamtheit einer erfindungsgemäßen Ventileinrichtung 1 ersichtlich, bei der es sich um ein bistabiles Ventil in 5/2-Wege-Ausführung handelt, das man auch als Impulsventil bezeichnen könnte.

Die Ventileinrichtung enthält ein durch Fluidkraft betätigbares Hauptventil 2 und zwei dessen Fluidbeaufschlagung steuernde Vorsteuerventile 3a, 3b, die elektrisch betätigbar sind und von denen das in der Zeichnung rechts liegende zweite Vorsteuerventil 3b nur teilweise abgebildet ist.

Die Ventileinrichtung 1 verfügt über ein Ventilgehäuse 4, das exemplarisch aus einem Mittelteil 5 und zwei an entgegengesetzten Stirnseiten daran angesetzten Außenteilen 6a, 6b besteht. Die Außenteile 6a, 6b tragen gleichzeitig jeweils eines der beiden Vorsteuerventile 3a, 3b.

Im Innern des Ventilgehäuses 4 erstreckt sich in dessen Längsrichtung eine längliche Aufnahmekammer 7, die zweckmäßigerweise das Mittelteil 5 vollständig durchzieht und an den beiden Stirnseiten durch die Außenteile 6a, 6b verschlossen ist. Zweckmäßigerweise erstreckt sich die Aufnahmekammer 7 axial beidseits jeweils ein Stückweit in die Außenteile 6a, 6b hinein.

In die Aufnahmekammer 7 münden seitlich, an axial zueinander beabstandeten Stellen, mehrere die Wandung des Ventilgehäuses 4 durchsetzende Ventilkanäle 8 ein. Im Innern der Aufnahmekammer 7 befindet sich ein zu der Aufnahmekammer 7 koaxialer, länglicher Ventilschieber 12, dessen Länge geringer ist als diejenige der Aufnahmekammer 7, so dass er in der Achsrichtung seiner mit der Längsachse der Aufnahmekammer 7 zusammenfallenden Längsachse 13 relativ zum Ventilgehäuse 4 verschiebbar ist. Es besteht somit die Möglichkeit, den Ventilschieber 12 zwischen einer aus Figur 1 ersichtlichen ersten Endstellung und einer diesbezüglich axial verlagerten zweiten Endstellung umzuschalten.

In den beiden möglichen Endstellungen werden die Ventilkanäle 8 in an sich bekannter Weise in unterschiedlichem Muster miteinander verbunden. Beim Ausführungsbeispiel wird ein an eine nicht gezeigte Druckquelle angeschlossener Speisekanal 8a abwechselnd mit jeweils einem von zwei zu einem ebenfalls nicht abgebildeten Verbraucher führenden Arbeitskanälen 8b, 8c verbunden. Gleichzeitig steht der jeweils nicht mit dem Speisekanal 8a verbundene Arbeitskanal 8b beziehungsweise 8c mit einem von zwei zur Atmosphäre führenden Abführkanälen 8d, 8e in Verbindung. Wenn die Ventileinrichtung 1 wie beim Ausführungsbeispiel zur Steuerung von Druckluft eingesetzt wird, fungieren die Abführkanäle 8d, 8e als Entlüftungskanäle.

Die Ventileinrichtung 1 des Ausführungsbeispiels ist vom Typ eines Schieberventils. Zwischen denjenigen Abschnitten der Aufnahmekammer 7, in die die Ventilkanäle 8 einmünden, sind gehäusefeste Steuerkanten 15 vorhanden, die mit am Ventilschieber angeordneten Steuerkanten 14 kooperieren können. Letztere sind an der Stirnseite zylindrischer Steuerabschnitte 16 ausgebildet, zwischen denen sich Überströmabschnitte kleineren Querschnittes erstrecken. Das Fluid strömt durch solche Überströmabschnitte hindurch, die momentan gleichzeitig mit den Ausmündungen unterschiedlicher Ventilkanäle 8 kommunizieren. Diejenigen Ventilkanäle 8, deren Kanalmündungen von einem Steuerabschnitt 16 überdeckt sind, sind momentan abgesperrt.

Die Steuerabschnitte 16 und die dazwischen angeordneten Überströmabschnitte sind vorzugsweise an einem länglichen, insbesondere einstückig ausgebildeten, in axialer Richtung abgestuften Steuerkörper 17 des Ventilschiebers 12 ausgebildet.

In die Aufnahmekammer 7 ist koaxial eine in axialer Richtung ortsfeste Führungshülse 18 eingesetzt. Sie behält im Betrieb der Ventileinrichtung 1 ihre axiale Relativposition bezüglich des Ventilgehäuses 4 bei. Der Ventilschieber 12 erstreckt sich koaxial im Innern der Führungshülse 18, wobei die Innenumfangsfläche der Führungshülse 18 eine Lauffläche 22 bildet, an der der Ventilschieber 12 mit dem Außenumfang seiner Steuerabschnitte 16 axial gleitverschieblich anliegt.

In der Wandung der Führungshülse 18 sind axial beabstandete Durchbrechungen ausgebildet, die die Fluidverbindungen zwischen den Ventilkanälen 8 und den Überströmabschnitten herstellen. Die gehäusefesten Steuerkanten 15 sind von den Mündungsrändern dieser Durchbrechungen gebildet.

Mit axialem Abstand um die Führungshülse 18 herum zwischen dieser und dem Ventilgehäuse 4 angeordnete Dichtungselemente 23 verhindern unerwünschte Leckströmungen zwischen benachbarten Ventilkanälen 8. Sie können gleichzeitig dazu genutzt werden, die Führungshülse 18 axial unbeweglich bezüglich des Ventilgehäuses 4 zu fixieren.

Die Steuerabschnitte 16 liegen an der Lauffläche 22 direkt und ohne Zwischenschaltung von zusätzlichen Dichtungselementen an. Die erforderliche Abdichtung wird allein durch das geringe Spaltmaß gewährleistet. Man spricht in einem solchen Fall von einem hartdichtenden System. Auf weichelastische Dichtungen wird zu Gunsten einer reibungsarmen Beweglichkeit verzichtet.

Die erste Endstellung wird durch am Ventilgehäuse 4 angeordnete erste Anschlagmittel 24a mechanisch vorgegeben, die nicht abgebildete zweite Endstellung durch ebenfalls ortsfest am Ventilgehäuse 4 angeordnete zweite Anschlagmittel 24b. Exemplarisch sind die ersten und zweiten Anschlagmittel 24a, 24b von Anschlagflächen gebildet, die an den die Aufnahmekammer 7 stirnseitig begrenzenden, vom Ventilgehäuse 4 gebildeten Abschlusswänden 25 ausgebildet sind. Sie können wie abgebildet ein Stückweit axial in die Aufnahmekammer 7 hinein vorstehen.

Der Ventilschieber 12 hat einen in der Zeichnung nach links weisenden ersten Endabschnitt 25a, der in der ersten Endstellung an den ersten Anschlagmitteln 24a anliegt. Ein axial entgegengesetzter zweiter Endabschnitt 25b des Ventilschiebers 12 ist in dieser ersten Endstellung von den ihm zugewandten zweiten Anschlagmitteln 24b abgehoben und beabstandet. In der zweiten Endstellung ist der Ventilschieber 12 in Figur 1 nach rechts verschoben und liegt mit seinem zweiten Endabschnitt 25b an den zweiten Anschlagmitteln 24b an, wobei dann ein axialer Abstand zwischen dem ersten Endabschnitt 25a und den ersten Anschlagmitteln 24a vorliegt.

Die Richtung des Umschaltens aus der nicht abgebildeten zweiten Endstellung in die abgebildete erste Endstellung sei als erste Umschaltrichtung 26a bezeichnet. Beim Umschalten in die zweite Endstellung bewegt sich der Ventilschieber 12 in einer entgegengesetzten zweiten Umschaltrichtung 26b. Ersichtlich nimmt beim Umschalten in die erste Endstellung der erste Endabschnitt 25a und beim Umschalten in die zweite Endstellung der zweite Endabschnitt 25b die momentan vorauseilende Position ein.

Die Umschaltbewegungen des Ventilschiebers 12 können durch Fluidbeaufschlagung zweier an den beiden Stirnseiten des Ventilschiebers 12 angeordneter Antriebsflächen 27 hervorgerufen werden. Das hierzu genutzte Steuerfluid ist durch die beiden Vorsteuerventile 3a, 3b gesteuert zu- und abführbar.

Jede Antriebsfläche 27 begrenzt einen vom zugeordneten Endabschnitt der Aufnahmekammer 7 definierten Antriebsraum 28, in den ein mit dem benachbarten Vorsteuerventil 3a, 3b verbundener Vorsteuer-Arbeitskanal 32 einmündet. Jedes Vorsteuerventil 3a, 3b ist außerdem über einen Vorsteuer-Speisekanal 33 mit dem Speisekanal 8a verbunden, um daraus das Steuerfluid abzuzweigen. Alternativ ist eine Verbindung auch mit einem separaten Vorsteuer-Speiseanschluss möglich. Schließlich weist jedes Vorsteuerventil 3a, 3b einen zur Atmosphäre führenden Vorsteuer-Abführkanal 34 auf.

Die diversen Vorsteuerkanäle 32, 33, 34 liegen außerhalb der Zeichenebene und sind deshalb nur strichpunktiert angedeutet.

Durch elektrische Betätigungssignale, die den Vorsteuerventilen 3a, 3b mittels elektrischer Schnittstellenmittel 35 von einer nicht gezeigten elektronischen Steuereinrichtung zugeführt werden können, lassen sich die Vorsteuerventile 3a, 3b derart betätigen, dass sich im zugeordneten Antriebsraum 28 entweder ein das Umschalten in die andere Endstellung bewirkender Steuerdruck aufbaut oder der Antriebsraum 28 drucklos ist.

Zweckmäßigerweise ist jede Antriebsfläche 27 an einem Antriebskolben 36 des Ventilschiebers 12 ausgebildet. Sowohl in dem den ersten Anschlagmitteln 24a zugeordneten ersten Endabschnitt 37a als auch in dem den zweiten Anschlagmitteln 24b zugeordneten zweiten Endabschnitt 37b der Aufnahmekammer 7 ist jeweils ein solcher Antriebskolben 36 aufgenommen, der zweckmäßigerweise in axialer Richtung nur lose an dem Steuerkörper 17 anliegt, so dass er nur Schubkräfte darauf ausüben kann. Es ist allerdings auch möglich, alle Komponenten des Ventilschiebers 12 fest zu einer Baueinheit zusammenzufassen.

Die Antriebskolben 36 haben zweckmäßigerweise einen größeren Querschnitt als der Steuerkörper 17, so dass die beiden Endabschnitte 37a, 37b der Aufnahmekammer 7 zur Aufnahme der Antriebskolben 36 im Durchmesser erweitert sind.

Damit der Ventilschieber 12 auch dann in der jeweiligen Endstellung sicher gehalten wird, wenn der zum Umschalten in diese Endstellung vorübergehend mit Steuerfluid beaufschlagte Antriebsraum 28 drucklos ist, ist jedem der beiden Endabschnitte 25a, 25b des Ventilschiebers 12 eine erste beziehungsweise zweite permanentmagnetische Halteeinrichtung 38a, 38b zugeordnet. Die erste permanentmagnetische Halteeinrichtung 38a kann den Ventilschieber 12 in der ersten Endstellung halten, die zweite permanentmagnetische Halteeinrichtung 38b ermöglicht das Festhalten des Ventilschiebers 12 in der zweiten Endstellung. In beiden Fällen erfolgt das Festhalten ausschließlich mittels durch mindestens einen Permanentmagnet 45 erzeugten, in Achsrichtung der Längsachse 13 orientierten axialen Magnetkräften F_{M}. Diese Magnetkräfte sind somit ohne elektrische Energie erzeugbar. Um das Umschalten des Ventilschiebers 12 zwischen den beiden Endstellungen zu ermöglichen, sind die durch das Steuerfluid auf den Ventilschieber 12 ausübbaren fluidischen Umschaltkräfte größer als die magnetischen Haltekräfte, so dass Letztere überwunden werden können.

Die beiden permanentmagnetischen Halteeinrichtungen 38a, 38b sind zweckmäßigerweise von identischem Aufbau. Unter Beibehaltung des erfindungsgemäßen Funktionsprinzips wären allerdings auch voneinander abweichende Ausführungsformen bei ein und derselben Ventileinrichtung 1 denkbar. Es besteht überdies die Möglichkeit, eine Ventileinrichtung 1 mit nur einer permanentmagnetischen Halteeinrichtung auszustatten, wenn nur eine der beiden Endstellungen des Ventilschiebers 12 durch Magnetkraft fixiert werden soll.

Zur Vereinfachung seien im Folgenden die "permanentmagnetischen Halteeinrichtungen" nur noch als "Halteeinrichtungen" bezeichnet.

Ein besonderer Vorteil des Ausführungsbeispiels liegt darin, dass die zum lösbaren magnetischen Festhalten der ersten Endstellung dienende erste Halteeinrichtung 38a dem zweiten Endabschnitt des Ventilschiebers 12 zugeordnet ist und die von dieser ersten Halteeinrichtung 38a erzeugbaren axialen Magnetkräfte F_{M} in der ersten Umschaltrichtung 26a orientiert sind, so dass der Ventilschieber 12 an die dem entgegengesetzten ersten Endabschnitt 25a des Ventilschiebers 12 zugeordneten ersten Anschlagmittel 24a angedrückt wird.

In entsprechender Weise ist die dem ersten Endabschnitt 25a des Ventilschiebers 12 zugeordnete zweite Halteeinrichtung 38b dazu ausgebildet, den Ventilschieber 12 in der zweiten Endstellung festzuhalten, indem sie in der zweiten Umschaltrichtung 26b wirkende axiale Magnetkräfte zu erzeugen vermag.

Jede Halteeinrichtung 38a, 38b ist in einen relativ zum Ventilgehäuse 4 beweglichen und einen bezüglich des Ventilgehäuses 4 ortsfesten Halteabschnitt 42, 43 aufgeteilt. Der "bewegliche" Halteabschnitt 42 ist so genannt, weil er mit dem Ventilschieber 12 bewegungsgekoppelt ist und somit dessen Umschaltbewegungen unmittelbar mitmacht. Der ortsfeste Halteabschnitt 43 kann je nach Ausführungsbeispiel vom Ventilgehäuse 4 selbst gebildet sein oder ist bezüglich dieses Ventilgehäuses 4 in Achsrichtung der Längsachse 13 unbeweglich angeordnet.

Bei dem abgebildeten bevorzugten Ausführungsbeispiel ist der ortsfeste Halteabschnitt 43 der beiden Halteeinrichtungen 38a, 38b unmittelbar von jeweils einem der beiden axialen Endabschnitte der bevorzugt einstückigen Führungshülse 18 gebildet. Diese besteht durchweg aus einem ferromagnetischen Material, insbesondere Stahl, so dass die stirnseitigen Endbereiche der Führungshülse 18 als Flussleitkörper 44 fungieren. Aufgrund der einstückigen Ausbildung der Führungshülse 18 bedarf es somit zur Realisierung der Flussleitkörper 44 keinerlei spezieller Maßnahmen.

Eine alternative, jedoch aufwendigere Bauweise würde darin bestehen, eigenständige Flussleitkörper an der Führungshülse 18 anzubringen, wobei die Führungshülse 18 in diesem Fall auch aus einem unmagnetischen Material bestehen könnte.

Insbesondere wenn keine Führungshülse 18 vorhanden wäre, könnte ein Flussleitkörper 44 auch direkt am Ventilgehäuse 4 angeordnet werden oder könnte sogar unmittelbar von einem Bestandteil des Ventilgehäuses 4 gebildet sein, wenn dieses in dem betroffenen Bereich aus einem ferromagnetischen Material besteht.

Bei allen Ausführungsformen ist es von Vorteil, wenn der ortsfeste Halteabschnitt 43 ringförmig ausgebildet und koaxial zum Ventilschieber 12 angeordnet ist. Bevorzugt wird insbesondere die aus der Zeichnung ersichtliche Bauweise, bei der der ortsfeste Halteabschnitt 43 den Ventilschieber 12 am zugeordneten Endabschnitt 25b, 25a koaxial umschließt.

Der bewegliche Halteabschnitt 42 befindet sich wie erwähnt am Ventilschieber 12 und beinhaltet mindestens einen Permanentmagnet 45. Exemplarisch ist dieser Permanentmagnet 45 unmittelbar an die Stirnfläche 46 des Steuerkörpers 17 angesetzt und daran in an sich beliebiger Weise, vorzugsweise aber durch einen noch näher zu beschreibenden Befestigungsbolzen 47, festgelegt. Der Steuerkörper 17 kann, muss jedoch nicht aus ferromagnetischem Material bestehen.

Außer dem Permanentmagnet 45 enthält der bewegliche Halteabschnitt 42 noch ein auf der dem Steuerkörper 17 axial entgegengesetzten Seite an den Permanentmagnet 45 angesetztes Polstück 48. Dessen in Achsrichtung der Längsachse 13 gemessene Breite ist vorzugsweise geringer als diejenige des Permanentmagneten 45. Während der Permanentmagnet 45 aus permanentmagnetischem Material besteht, ist das Polstück 48 ferromagnetisch und besteht beispielsweise aus Stahl.

Zu Gunsten einer leichten Befestigung sind der Permanentmagnet 45 und das Polstück 48 jeweils als Ringkörper ausgebildet. Sie können dadurch leicht mittels eines einzigen Befestigungsbolzens 47 gleichzeitig am Steuerkörper 17 fixiert werden.

Der vorzugsweise aus unmagnetischem Material und insbesondere aus einem Kunststoffmaterial bestehende Befestigungsbolzen 47 verfügt über einen Befestigungsschaft 52 und einen diesbezüglich einen größeren Querschnitt aufweisenden Befestigungskopf 53. Der bewegliche Halteabschnitt 42 - hier der Permanentmagnet 45 und das Polstück 48 - sind von dem Befestigungsschaft 52 durchsetzt und axial unbeweglich zwischen der Stirnfläche 46 und dem Befestigungskopf 53 festgelegt. Der Befestigungsschaft 52 taucht stirnseitig in den Steuerkörper 17 ein und ist in diesem axial unbeweglich fixiert.

Der Befestigungsbolzen 47 ist zu seiner Fixierung zweckmäßigerweise mit dem Befestigungsschaft 52 in eine axiale Bohrung 54 des Steuerkörpers 17 axial unbeweglich eingepresst oder eingeschraubt. Zusätzlich oder alternativ kann auch eine Klebeverbindung vorliegen. Jedenfalls sollte die Verbindung so ausgebildet sein, dass sich auch bei auf den Befestigungsbolzen 47 axial einwirkenden Stoßkräften keine Veränderung der axialen Relativposition zwischen dem Befestigungskopf 53 und dem Steuerkörper 17 einstellt. Derartige Kräfte, die ansonsten eine Beschädigung oder Zerstörung des Permanentmagneten 45 hervorrufen könnten, werden somit um den Permanentmagnet 45 herumgeleitet.

Resultieren können solche axialen Stoßkräfte aus dem Aufprall des Ventilschiebers 12 an den Anschlagmitteln 24a, 24b. Beim Ausführungsbeispiel stützt sich der Antriebskolben 36 an der dem Permanentmagnet 45 abgewandten äußeren Stirnfläche des Befestigungskopfes 53 ab und leitet Stoßkräfte in den Befestigungsbolzen 47 ein, wenn er beim Erreichen der ihm zugeordneten Endstellung auf die ihm gegenüberliegenden ersten beziehungsweise zweiten Anschlagmittel 24a, 24b aufprallt.

Der bewegliche Halteabschnitt 42 wird somit wirksam von einer nennenswerten mechanischen Beeinträchtigung abgeschirmt.

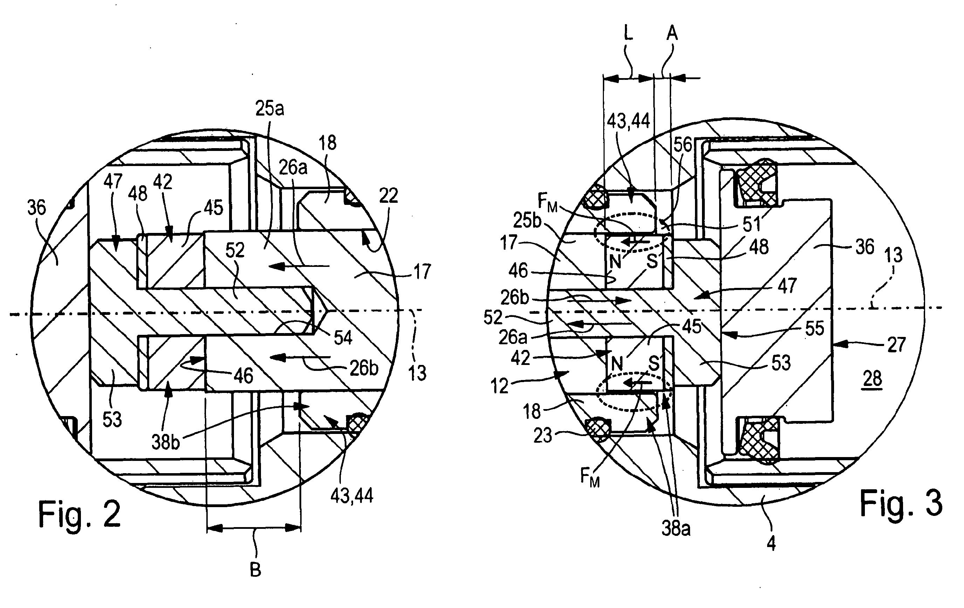

Der bewegliche Halteabschnitt 42 bildet ein in Figur 3 gestrichelt angedeutetes Magnetfeld 56 aus. Als optimal hat es sich hierbei erwiesen, auf einen Permanentmagnet 45 mit axialer Polarisierung zurückzugreifen, wobei also Nordpol und Südpol sich in Achsrichtung der Längsachse 13 gegenüberliegen. Das vorgeschaltete Polstück 48, vorzugsweise scheibenförmig und insbesondere gelocht ausgebildet, kann zu einer Bündelung der Feldlinien und einem bevorzugten radialen Austritt derselben aus dem beweglichen Halteabschnitt 42 beitragen. Allerdings wäre die Funktionsweise der Halteeinrichtung 38a, 38b auch ohne zusätzliches Polstück 48 gewährleistet.

Für den angestrebten magnetischen Halteeffekt wesentlich ist die Anordnung und gegenseitige Zuordnung des beweglichen und ortsfesten Halteabschnittes 42, 43. Insbesondere aus Figuren 2 und 3 ist gut zu erkennen, dass diese beiden Halteabschnitte 42, 43 in bezüglich der Längsachse 13 radialer Richtung versetzt zueinander angeordnet sind, wobei exemplarisch der ortsfeste Halteabschnitt 43 radial weiter außen liegt als der bewegliche Halteabschnitt 42. Zweckmäßigerweise kommt auch noch dazu, dass sich keine radiale Überlappung der beiden Halteabschnitte 42, 43 einstellt und somit kein axialer Luftspalt auftritt, in dem sich ein axiales Magnetfeld ausbilden könnte.

Der erwähnte radiale Versatz ergibt sich beim Ausführungsbeispiel durch die bezüglich der Längsachse 13 koaxiale Anordnung der beiden Halteabschnitte 42, 43. Hiervon abweichend ließe sich der genannte Effekt aber auch durch Halteabschnitte realisieren, die sich nicht durchgängig entlang des Umfanges der Längsachse 13 erstrecken. Eine symmetrische Anordnung ist jedoch gleichwohl stets von Vorteil, um ein Einwirken unausgeglichener Querkräfte auf den Ventilschieber 12 zu vermeiden.

Die beiden Halteabschnitte 42, 43 sind außerdem so angeordnet, dass in der ersten Endstellung des Ventilschiebers 12 der bewegliche Halteabschnitt 42 und der ortsfeste Halteabschnitt 43 der ersten Halteeinrichtung 38a mit einem aus Figur 3 exemplarisch ersichtlichen axialen Versatz "A" zueinander angeordnet sind, so dass der bewegliche Halteabschnitt 42 mit zumindest einem Teil seiner Länge in Richtung zur zweiten Endstellung - also in der zweiten Umschaltrichtung 26b - dem ortsfesten Halteabschnitt 43 axial vorgelagert ist.

Entsprechendes gilt mit umgekehrten Vorzeichen für die Halteabschnitte 42, 43 der zweiten Halteeinrichtung 38b, wenn der Ventilschieber 12 die zweite Endstellung einnimmt.

Das Magnetfeld 56 durchdringt somit den radial weiter außen liegenden Flussleitkörper 44 und verfügt in dem sich im Bereich des axialen Versatzes "A" ausbildenden Luftspalt 51 über eine axiale Magnetfeldkomponente, die die axialen Magnetkräfte F_{M} bildet.

Mit anderen Worten wird der Ventilschieber 12 durch die sich zwischen den beiden axial versetzten Halteabschnitten 42, 43 ausbildende axiale Magnetfeldkomponente des hier axial und radial verlaufendenb Magnetfeldes in Richtung der dem jenseitigen Endabschnitt des Ventilschiebers 12 zugeordneten Endstellung gezogen.

Diese magnetische Haltekraft ist wenig toleranzanfällig und ändert sich nicht gravierend bei einer Änderung der Größe des in der festzuhaltenden Endstellung vorliegenden axialen Versatzes "A".

Vorzugsweise ragt der bewegliche Halteabschnitt 42 der ersten Halteeinrichtung 38a auf der vom ersten Endabschnitt 25a wegweisenden Seite aus dem ihm zugeordneten ortsfesten Halteabschnitt 43 heraus, wenn der Ventilschieber 12 die erste Endstellung einnimmt. Ebenfalls vorzugsweise ragt der bewegliche Halteabschnitt 42 der zweiten Halteeinrichtung 38b auf der vom zweiten Endabschnitt 25b wegweisenden Seite aus dem ihm zugeordneten ortsfesten Halteabschnitt 43 heraus, wenn der Ventilschieber 12 die zweite Endstellung einnimmt.

Um möglichst viel Spielraum für einen Toleranzausgleich zu schaffen, ist es von Vorteil, wenn die Anordnung so getroffen ist, dass sich der bewegliche Halteabschnitt 42 und der ortsfeste Halteabschnitt 43 bei Einnahme der von ihnen festzuhaltenden Endstellung in axialer Richtung überlappen. Die Länge der axialen Überlappung ist in Figur 3 bei "L" angedeutet. Sofern ein Polstück 48 zur Anwendung kommt, sollte die Auslegung möglichst so getroffen sein, dass es bei Einnahme der zu fixierenden Endstellung mit seiner gesamten Dicke axial außerhalb des ortsfesten Halteabschnittes 43 zu liegen kommt.

Es versteht sich, dass die Halteeinrichtungen 38a, 38b auch jeweils mehr als nur einen Permanentmagneten 45 aufweisen können. Es besteht insgesamt die Möglichkeit, entweder nur den beweglichen oder nur den ortsfesten Halteabschnitt 42, 43 oder gleichzeitig beide Halteabschnitte 42, 43 mit mindestens einem Permanentmagnet 45 auszustatten. Ist nur der ortsfeste Halteabschnitt 43 mit mindestens einem Permanentmagnet 45 versehen, wird der bewegliche Halteabschnitt 42 als Flussleitkörper ausgebildet, und umgekehrt.

In der ersten Endstellung ist die erste Halteeinrichtung 38a aktiv und die zweite Halteeinrichtung 38b inaktiv. Wie aus Figur 2 gut ersichtlich ist, ist der bewegliche Halteabschnitt 42 der inaktiven zweiten Halteeinrichtung 38b in der ersten Endstellung vollständig axial aus dem zugeordneten ortsfesten Halteabschnitt 43 ausgefahren, wobei der sich hierbei einstellende axiale Abstand "B" (Figur 2) so groß ist, dass sich keine relevanten, in Richtung der zweiten Endstellung wirkenden axialen Magnetfeldkomponenten ausbilden können. Entsprechendes gilt für die Halteabschnitte 42, 43 der ersten Halteeinrichtung 38a bei Einnahme der zweiten Endstellung. Man kann auf diese Weise das Entstehen unerwünschter magnetischer Rückstellkräfte in den Endstellungen vermeiden.

Der sowieso vorhandene, mit dem Ventilschieber 12 bewegungsgekoppelte Permanentmagnet 45 kann bei Bedarf zusätzlich zur magnetischen Detektion mindestens einer Schaltstellung des Ventilschiebers 12 genutzt werden. Beispielsweise kann - wie dies in Figur 1 angedeutet ist - das Ventilgehäuse 4 im Bereich mindestens eines Endabschnittes 25b des Ventilschiebers 12 mit Positionserfassungsmitteln 57 ausgestattet sein - beispielsweise ein magnetfeldempfindlicher Sensor -, die auf das Magnetfeld des Permanentmagneten 45 ansprechen. Bei Bedarf können beiden Halteeinrichtungen 38a, 38b derartige Positionserfassungsmittel 47 zugeordnet sein, so dass sich beide Endstellungen exakt überwachen lassen.

## Patentansprüche

1. Ventileinrichtung, mit einem in einer Aufnahmekammer (7) eines Ventilgehäuses (4) zum Ändern seiner Schaltstellung axial bewegbar angeordneten Ventilschieber (12), der zwischen einer durch Anschlagmittel (24a) vorgegebenen ersten Endstellung und einer zweiten Endstellung umschaltbar ist, und der in der ersten Endstellung durch in Richtung der ersten Endstellung wirkende und ihn gegen die Anschlagmittel (24a) drückende axiale Magnetkräfte lösbar festgehalten wird, die von einer mindestens einen Permanentmagnet (45) enthaltenden permanentmagnetischen Halteeinrichtung (38a) erzeugt werden, die einen am Ventilschieber (12) angeordneten und dessen Umschaltbewegung mitmachenden beweglichen Halteabschnitt (42) und einen mit diesem beweglichen Halteabschnitt (42) magnetisch zusammenwirkenden, ortsfest am Ventilgehäuse (4) angeordneten ortsfesten Halteabschnitt (43) aufweist, wobei der bewegliche und der ortsfeste Halteabschnitt (42, 43) der permanentmagnetischen Halteeinrichtung (38a) in einer bezüglich der Längsachse (13) des Ventilschiebers (12) radialen Richtung versetzt zueinander angeordnet sind und außerdem so angeordnet sind, dass der bewegliche Halteabschnitt (42) in der ersten Endstellung dem ortsfesten Halteabschnitt (43) mit zumindest einem Teil seiner Länge in Richtung der zweiten Endstellung axial vorgelagert ist und die axialen Magnetkräfte somit aus der axialen Magnetfeldkomponente des sich zwischen den beiden axial versetzten Halteabschnitten (42, 43) ausbildenden Magnetfeldes resultieren, wobei der Ventilschieber (12) zwei einander entgegengesetzt orientierte, erste und zweite Endabschnitte (25a, 25b) aufweist und beim Umschalten in die erste Endstellung mit vorauseilendem erstem Endabschnitt (25a) in einer ersten Umschaltrichtung (26a) und beim Umschalten in die zweite Endstellung mit vorauseilendem zweitem Endabschnitt (25b) in einer zweiten Umschaltrichtung (26b) verschoben wird, **dadurch gekennzeichnet, dass** die zum lösbaren magnetischen Festhalten der ersten Endstellung dienende permanentmagnetische Halteeinrichtung (38a) dem zweiten Endabschnitt (25b) des Ventilschiebers (12) zugeordnet ist und die von dieser permanentmagnetischen Halteeinrichtung (38a) erzeugten axialen Magnetkräfte in der ersten Umschaltrichtung (26a) orientiert sind.

2. Ventileinrichtung nach Anspruch 1, **dadurch gekennzeichnet, dass** sich der bewegliche und der ortsfeste Halteabschnitt (42, 43) in der ersten Endstellung in axialer Richtung überlappen.

3. Ventileinrichtung nach Anspruch 1 oder 2, **dadurch gekennzeichnet, dass** der ortsfeste Halteabschnitt (43) ringförmig ausgebildet und koaxial zum Ventilschieber (12) angeordnet ist, wobei er den Ventilschieber (12) zweckmäßigerweise koaxial umschließt.

4. Ventileinrichtung nach Anspruch 3, **dadurch gekennzeichnet, dass** der Ventilschieber (12) von einer in das Ventilgehäuse (4) eingesetzten und bezüglich des Ventilgehäuses (4) ortsfest angeordneten Führungshülse (18) umgeben ist, deren einer Endabschnitt den ortsfesten Halteabschnitt (43) aufweist oder bildet.

5. Ventileinrichtung nach einem der Ansprüche 1 bis 4, **dadurch gekennzeichnet, dass** der ortsfeste Halteabschnitt (43) von einem aus einem ferromagnetischen Material bestehenden Flussleitkörper (44) gebildet ist.

6. Ventileinrichtung nach Anspruch 5 in Verbindung mit Anspruch 4, **dadurch gekennzeichnet, dass** die Führungshülse (18) den Flussleitkörper (44) bildet und zweckmäßigerweise zur Gänze aus einem ferromagnetischen Material besteht.

7. Ventileinrichtung nach einem der Ansprüche 1 bis 6, **dadurch gekennzeichnet, dass** der bewegliche Halteabschnitt (42) an einem Endabschnitt des Ventilschiebers (12) angeordnet ist, der zweckmäßigerweise mindestens einen Permanentmagnet (45) aufweist, der koaxial zur Längsachse (13) des Ventilschiebers (12) angeordnet sein kann.

8. Ventileinrichtung nach Anspruch 7, **dadurch gekennzeichnet, dass** der bewegliche Halteabschnitt (42) mindestens ein den Permanentmagnet (45) axial flankierendes ferromagnetisches Polstück (48) aufweist, dessen in Achsrichtung der Längsachse (13) des Ventilschiebers (12) gemessene Dicke zweckmäßigerweise geringer ist als diejenige des Permanentmagneten (45).

9. Ventileinrichtung nach Anspruch 7 oder 8, **dadurch gekennzeichnet, dass** der Permanentmagnet (45) und das eventuell vorhandene Polstück (48) als Ringkörper ausgebildet sind.

10. Ventileinrichtung nach einem der Ansprüche 7 bis 9, **dadurch gekennzeichnet, dass** der Ventilschieber (12) einen länglichen Steuerkörper (17) aufweist, an den der bewegliche Halteabschnitt (42) stirnseitig ortsfest angesetzt ist.

11. Ventileinrichtung nach Anspruch 10 in Verbindung mit Anspruch 9, **dadurch gekennzeichnet, dass** zur Fixierung des beweglichen Halteabschnittes (42) ein einen Befestigungsschaft (52) und einen diesbezüglich breiteren Befestigungskopf (53) aufweisender Befestigungsbolzen (47) vorhanden ist, der den beweglichen Halteabschnitt (42) mit seinem Befestigungsschaft (52) durchsetzt, sodass der bewegliche Halteabschnitt (42) axial zwischen dem Befestigungskopf (53) und der Stirnfläche (46) des Steuerkörpers (17) gehalten ist, wobei der Befestigungsschaft (52) axial in den Steuerkörper (17) eintaucht und in diesem axial unbeweglich fixiert ist.

12. Ventileinrichtung nach einem der Ansprüche 1 bis 11, **dadurch gekennzeichnet, dass** der Ventilschieber (12) im Bereich wenigstens einer Stirnseite einen ein Umschalten des Ventilschiebers (12) durch Fluidbeaufschlagung ermöglichenden Antriebskolben (36) aufweist, wobei der bewegliche Halteabschnitt (42) zweckmäßigerweise axial zwischen dem Antriebskolben (36) und einem für die eigentliche Fluidsteuerung verantwortlichen länglichen Steuerkörper (17) des Ventilschiebers (12) angeordnet ist.

13. Ventileinrichtung nach einem der Ansprüche 1 bis 12, **dadurch gekennzeichnet, dass** weitere, zweite Anschlagmittel (24b) zur Vorgabe der zweiten Endstellung vorhanden sind und dass eine weitere, zweite permanentmagnetische Halteeinrichtung (38b) zum lösbaren Festhalten des Ventilschiebers (12) in der zweiten Endstellung vorhanden ist, die zweckmäßigerweise nach dem gleichen Funktionsprinzip wie die andere, erste Halteeinrichtung (38a) aufgebaut ist, wobei die beiden permanentmagnetischen Halteeinrichtungen (38a, 38b) insbesondere jeweils einem der beiden axial entgegengesetzt orientierten Endabschnitte (25a, 25b) des Ventilschiebers (12) zugeordnet sind.

14. Ventileinrichtung nach einem der Ansprüche 1 bis 13, **dadurch gekennzeichnet, dass** dem ersten Endabschnitt (25a) des Ventilschiebers (12) eine weitere, zweite permanentmagnetische Halteeinrichtung (38b) zugeordnet ist, die zum Festhalten des Ventilschiebers (12) in der zweiten Endstellung geeignete, in der zweiten Umschaltrichtung (26b) orientierte axiale Magnetkräfte hervorrufen kann.

15. Ventileinrichtung nach einem der Ansprüche 1 bis 14, **dadurch gekennzeichnet, dass** das Ventilgehäuse (4) mit auf den beweglichen Halteabschnitt (42) ansprechenden Positionserfassungsmitteln (57) ausgestattet ist.

## Claims

1. Valve mechanism having a slide valve (12) arranged so that it is axially movable in a receiving chamber (7) of a valve housing (4) to change its switching position, which slide valve (12) can be switched between a first end position predetermined by stop means (24a) and a second end position, and which slide valve (12) is detachably held tight in the first end position by axial magnetic forces acting in the direction of the first end position and pressing it against the stop means (24a), which magnetic forces are produced by a permanent magnetic retaining mechanism (38a) containing at least one permanent magnet (45), which retaining mechanism (38a) has a movable retaining section (42), which is arranged on the slide valve (12) and which participates in its switching movement, and an immovable retaining section (43) which magnetically interacts with this movable retaining section (42) and which is immovably arranged on the valve housing (4), wherein the movable and the immovable retaining sections (42, 43) of the permanent magnetic retaining mechanism (38a) are arranged offset in relation to one another in a radial direction with regard to the longitudinal axis (13) of the slide valve (12) and are also arranged such that the movable retaining section (42) in the first end position is axially in front of the immovable retaining section (43) with at least one part of its length in the direction of the second end position and the axial magnetic forces therefore result from the axial magnetic field component of the magnetic field which forms between the two axially offset retaining sections (42, 43), wherein the slide valve (12) has two, first and second end sections (25a, 25b) orientated opposite one another and is moved in a first switching direction (26a) when switching into the first end position with leading first end section (25a) and is moved in a second switching direction (26b) when switching into the second end position with leading second end section (25b), **characterised in that** the permanent magnetic retaining mechanism (38a) used to detachably, magnetically hold the first end position tight is allocated to the second end section (25b) of the slide valve (12) and the axial magnetic forces produced by this permanent magnetic retaining mechanism (38a) are orientated in the first switching direction (26a).

2. Valve mechanism according to Claim 1, **characterised in that** the movable and the immovable retaining sections (42, 43) overlap in the axial direction in the first end position.

3. Valve mechanism according to Claim 1 or 2, **characterised in that** the immovable retaining section (43) is annular and is arranged coaxially to the slide valve (12), wherein it advantageously coaxially encloses the slide valve (12).

4. Valve mechanism according to Claim 3, **characterised in that** the slide valve (12) is surrounded by a guide sleeve (18) inserted into the valve housing (4) and immovably arranged with regard to the valve housing (4), one end section of which guide sleeve (18) has or forms the immovable retaining section (43).

5. Valve mechanism according to any one of Claims 1 to 4, **characterised in that** the immovable retaining section (43) is formed from a flux conducting body (44) consisting of a ferromagnetic material.

6. Valve mechanism according to Claim 5 in conjunction with Claim 4, **characterised in that** the guide sleeve (18) forms the flux conducting body (44) and advantageously consists entirely of a ferromagnetic material.

7. Valve mechanism according to any one of Claims 1 to 6, **characterised in that** the movable retaining section (42) is arranged on one end section of the slide valve (12), which advantageously has at least one permanent magnet (45), which can be arranged coaxially to the longitudinal axis (13) of the slide valve (12).

8. Valve mechanism according to Claim 7, **characterised in that** the movable retaining section (42) has at least one ferromagnetic pole piece (48) axially flanking the permanent magnet (45), whose thickness measured in the axial direction of the longitudinal axis (13) of the slide valve (12) is advantageously less than that of the permanent magnet (45).

9. Valve mechanism according to Claim 7 or 8, **characterised in that** the permanent magnet (45) and the possibly present pole piece (48) are formed as annular bodies.

10. Valve mechanism according to any one of Claims 7 to 9, **characterised in that** the slide valve (12) has an elongated control body (17) onto which the movable retaining section (42) is immovably attached on the face side.

11. Valve mechanism according to Claim 10 in conjunction with Claim 9, **characterised in that** a fastening bolt (47) having a fastening shaft (52) and a fastening head (53), which is wider in relation to this, is present for fixing the movable retaining section (42), which fastening bolt (47) infiltrates the movable retaining section (42) with its fastening shaft (52), so that the movable retaining section (42) is axially held between the fastening head (53) and the front face (46) of the control body (17), wherein the fastening shaft (52) is axially plunged into the control body (17) and fixed into this so that it cannot axially move.

12. Valve mechanism according to any one of Claims 1 to 11, **characterised in that** the slide valve (12) has in the region of at least one face side a drive piston (36) enabling the slide valve (12) to be switched by applying fluid pressure, wherein the movable retaining section (42) is advantageously arranged axially between the drive piston (36) and an elongated control body (17), which is responsible for the actual fluid control, of the slide valve (12).

13. Valve mechanism according to any one of Claims 1 to 12, **characterised in that** further, second stop means (24b) are present for predetermining the second end position, and **in that** a further, second permanent magnetic retaining mechanism (38b) is present for detachably holding the slide valve (12) tight in the second end position, which is advantageously constructed according to the same functional principle as the other, first retaining mechanism (38a), wherein the two permanent magnetic retaining mechanisms (38a, 38b) are in particular in each case allocated to one of the two end sections (25a, 25b) of the slide valve (12) axially aligned opposite one another.

14. Valve mechanism according to any one of Claims 1 to 13, **characterised in that** a further, second permanent magnetic retaining mechanism (38b) is allocated to the first end section (25a) of the slide valve (12), which can generate axial magnetic forces suitable for holding the slide valve (12) tightly in the second end position and aligned in the second switching position (26b).

15. Valve mechanism according to any one of Claims 1 to 14, **characterised in that** the valve housing (4) is equipped with position detection means (57) responding to the movable retaining section (42).

## Revendications

1. Dispositif à soupape, comportant un tiroir de soupape (12), monté mobile dans la direction axiale dans une chambre de réception (7) d'un boîtier de soupape (4) pour modifier sa position de commutation, lequel est apte à être commuté entre une première position de fin de course, définie par un organe de butée (24a), et une deuxième position de fin de course et lequel è immobilisé de manière amovible dans la première position de fin de course par des forces magnétiques axiales, qui agissent en direction de la première position de fin de course et le plaquent contre les organes de butée (24a) et qui sont générées par un dispositif de retenue (38a) à aimantation permanente, qui contient au moins un aimant permanent (45) et qui comporte une partie de retenue mobile (42), agencée sur le tiroir de soupape (12) et suivant le mouvement de commutation de celui-ci, et une partie de retenue fixe (43), coopérant par voie magnétique avec ladite partie de retenue mobile (42) et agencée de manière fixe sur le boîtier de soupape (4), sachant que la partie de retenue mobile (42) et la partie de retenue fixe (43) du dispositif de retenue (38a) à aimantation permanente sont disposées en étant décalées l'une par rapport à l'autre dans une direction radiale par rapport à l'axe longitudinal (13) du tiroir de soupape (12) et, par ailleurs, sont agencées de telle sorte que la partie de retenue mobile (42) dans la première position de fin de course est logée axialement en amont de la partie de retenue fixe (43) avec au moins une partie de sa longueur en direction de la deuxième position de fin de course, et les forces magnétiques axiales résultent ainsi des composantes axiales du champ magnétique se formant entre les deux parties de retenue (42, 43) décalées axialement, sachant que le tiroir de soupape (12) comporte deux parties d'extrémité (25a, 25b), une première et une deuxième, orientées dans le sens opposé l'une de l'autre, et, lors de la commutation dans la première position de fin de course, est déplacé avec la première partie d'extrémité (25a) avant dans une première direction de commutation (26a) et, lors de la commutation dans la deuxième position de fin de course, est déplacé avec la deuxième partie d'extrémité (25b) avant dans une deuxième direction de commutation (26b), **caractérisé en ce que** le dispositif de retenue (38a) à aimantation permanente, utilisé pour l'immobilisation magnétique amovible de la première position de fin de course, est associé à la deuxième partie d'extrémité (25b) du tiroir de soupape (12), et les forces magnétiques axiales, générées par ledit dispositif de retenue à aimantation permanente sont orientées dans la première direction de commutation (26a).

2. Dispositif à soupape selon la revendication 1, **caractérisé en ce que** la partie de retenue mobile (42) et la partie de retenue fixe (43) se chevauchent dans la première position de fin de course.

3. Dispositif à soupape selon la revendication 1 ou 2, **caractérisé en ce que** la partie de retenue fixe (43) est réalisée avec une forme annulaire et est disposée coaxialement au tiroir de soupape (12), sachant que, de manière judicieuse, elle entoure coaxialement le tiroir de soupape (12).

4. Dispositif à soupape selon la revendication 3, **caractérisé en ce que** le tiroir de soupape (12) est entouré par un manchon de guidage (18), qui est inséré dans le boîtier de soupape (4) et est agencé de manière fixe par rapport au boîtier de soupape (4) et dont une partie d'extrémité comporte ou forme la partie de retenue fixe (43).

5. Dispositif à soupape selon l'une quelconque des revendications 1 à 4, **caractérisé en ce que** la partie de retenue fixe (43) est formée par un corps de guidage du flux (44) réalisé dans un matériau ferromagnétique.

6. Dispositif à soupape selon la revendication 5 en association avec la revendication 4, **caractérisé en ce que** le manchon de guidage (18) forme le corps de guidage du flux (44) et, de manière judicieuse, est réalisé en entier dans un matériau ferromagnétique.

7. Dispositif à soupape selon l'une quelconque des revendications 1 à 6, **caractérisé en ce que** la partie de retenue mobile (42) est agencée sur une partie d'extrémité du tiroir de soupape (12), qui comporte judicieusement au moins un aimant permanent (45) qui peut être agencé coaxialement à l'axe longitudinal (13) du tiroir de soupape (12).

8. Dispositif à soupape selon la revendication 7, **caractérisé en ce que** la partie de retenue mobile (42) comporte au moins une pièce polaire (48) ferromagnétique, qui flanque axialement l'aimant permanent (45) et dont l'épaisseur, mesurée dans la direction axiale de l'axe longitudinal (13) du tiroir de soupape (12), est judicieusement inférieure à l'épaisseur de l'aimant permanent (45).

9. Dispositif à soupape selon la revendication 7 ou 8, **caractérisé en ce que** l'aimant permanent (45) et la pièce polaire (48), éventuellement présente, sont réalisés sous forme de corps annulaires.

10. Dispositif à soupape selon l'une quelconque des revendications 7 à 9, **caractérisé en ce que** le tiroir de soupape (12) comporte un corps de commande (17) allongé, auquel la partie de retenue mobile (42) est attachée de manière localement fixe du côté frontal.

11. Dispositif à soupape selon la revendication 10 en association avec la revendication 9, **caractérisé en ce que** pour la fixation de la partie de retenue mobile (42), il est prévu un boulon de fixation (47), qui comporte une tige de fixation (52) et une tête de fixation (53) plus large que cette dernière et qui passe à travers la partie de retenue mobile (42) avec sa tige de fixation (52), de telle sorte que la partie de retenue mobile (42) est maintenue axialement entre la tête de fixation (53) et la face frontale (46) du corps de commande (17), la tige de fixation (52) s'engageant axialement dans le corps de commande (17) et étant fixée de manière immobile axialement dans celui-ci.

12. Dispositif à soupape selon l'une quelconque des revendications 1 à 11, **caractérisé en ce que** le tiroir de soupape (12), dans la zone d'au moins une face frontale, comporte un piston d'entraînement (36) permettant une commutation du tiroir de soupape (12) sous l'effet de la sollicitation par un fluide, la partie de retenue mobile (42) étant agencée judicieusement entre le piston d'entraînement (36) et un corps de commande (17) allongé du tiroir de soupape (12), lequel est responsable de la commande proprement dite du fluide.

13. Dispositif à soupape selon l'une quelconque des revendications 1 à 12, **caractérisé en ce qu'**il est prévu des deuxièmes organes de butée (24b) supplémentaires pour définir la deuxième position de fin de course, et **en ce qu'**il est prévu un deuxième dispositif de retenue (38b) à aimantation permanente supplémentaire pour immobiliser de manière amovible le tiroir de soupape (12) dans la deuxième position de fin de course, lequel est configuré judicieusement selon le même principe de fonctionnement que l'autre premier dispositif de retenue (38a), les deux dispositifs de retenue (38a, 38b) à aimantation permanente étant associés en particulier chacun à l'une des deux parties d'extrémité (25a, 25b) du tiroir de soupape (12), orientées axialement dans des sens opposés.

14. Dispositif à soupape selon l'une quelconque des revendications 1 à 13, **caractérisé en ce qu'**à la première partie d'extrémité (25a) du tiroir de soupape (12) est associé un deuxième dispositif de retenue (38b) à aimantation permanente supplémentaire, qui peut générer des forces magnétiques axiales orientées dans la deuxième direction de commutation (26b) et aptes à retenir le tiroir de soupape (12) dans la deuxième position de fin de course.

15. Dispositif à soupape selon l'une quelconque des revendications 1 à 14, **caractérisé en ce que** le boîtier de soupape (4) est équipé de moyens de détection de la position (57), réagissant à la partie de retenue mobile (42).
